# EUROPÄISCHE PATENTSCHRIFT

(11) **EP 1 824 653 B1**
(45) Veröffentlichungstag und Bekanntmachung des Hinweises auf die Patenterteilung: **11.01.2012**
(21) Anmeldenummer: 05808660.4
(22) Anmeldetag: 16.11.2005
(51) Int. Cl.: B29C 33/04, B29C 41/46

(54) **WERKZEUGFORM UND VERFAHREN FÜR DIE HERSTELLUNG VON FORMKÖRPERN**
MOULD TOOL AND METHOD FOR THE PRODUCTION OF MOULDED BODIES
MOULE ET PROCEDE POUR LA FABRICATION DE CORPS MOULES

(30) Priorität: 10.12.2004 DE 102004059459
(43) Veröffentlichungstag der Anmeldung: 29.08.2007
(73) Patentinhaber: Johnson Controls Interiors GmbH & Co. KG, 47929 Grefrath (DE)
(72) Erfinder: DALIBOR, Harald, 30826 Garbsen (DE); ANDRE, Walter, 29699 Bomlitz (DE)
(74) Vertreter: Liedtke, Markus
(86) Internationale Anmeldenummer: PCT/EP2005/012274
(87) Internationale Veröffentlichungsnummer: WO 2006/061089

(56) Entgegenhaltungen:
- EP-A- 0 533 418
- GB-A- 2 172 542
- US-A- 3 733 161
- US-A- 4 389 177
- US-A- 5 260 014
- US-A1- 2002 100 858

## Beschreibung

Die Erfindung betrifft eine Werkzeugform und ein Verfahren für die formgebende Herstellung von Formkörpern aus Polymerwerkstoffen, insbesondere Polymergranulaten bzw. Polymer-Pulvern, bei der die formgebende Herstellung unter Wärmezufuhr und Formgebung an inneren Wandungsbereichen der Werkzeugform erfolgt.

Solche Werkzeugformen kommen in einer Vielzahl, von Anwendungsfällen/Herstellungsprozessen zum Einsatz, bei denen der durch Wärme und/oder Druck plastifizierte oder auch aufgesprühte Polymerwerkstoff innerhalb der Werkzeugform durch die oder während der Polymerisation-oder durch die während eines Sinterprozesses erfolgende Festigung/Molekülkettenbildung in eine neue Form gebracht und/oder mit einer neuen Oberflächenstruktur oder -textur versehen wird. Bei den bekannten Verfahren wird zwischen dem Rotationssinterverfahren, dem Sprühverfahren und dem Gießverfahren unterschieden.

Bekannte Werkzeugformen zum Herstellen von Formköpern aus flocken- oder pulverförmigen Kunststoffmaterial nach dem Formaufschmelzverfahren umfassen einen zweiteiligen Formbehälter, der aus einem Pulverkasten und einer nacheinander beheiz- und kühlbaren Formschale besteht. Solche Werkzeugformen sind bespielsweise aus der US 4,389,177 und der GB 2,172,542 bekannt.

Derartige Werkzeugformen werden zur Erzielung einer gleichförmigen Formkörperdicke und einer hochwertigen Oberflächenqualität, vor allem bei komplizierten Raumformen, in verschiedenen Richtungen gedreht und bewegt. Vorrangiges Ziel ist es hierbei, eine gleichmäßige Wandstärke des Formkörpers zu erreichen.

Nachteilig bei den bekannten Werkzeugformen ist, das ein durch Vergrößerung der Wanddicke verstärkter Bereich im Formkörper nur dadurch erreicht werden kann, dass das gesamte Formteil mit größerer Wanddicke ausgebildet wird. Dies führt nachteilig zu einer Zunahme des Gesamtgewichts des hergestellten Formkörpers.

Der Erfindung liegt daher die Aufgabe zugrunde, eine Werkzeugform der eingangs geannten Art dahingehend weiterzuentwickeln, dass mit dieser Formkörper mit partiellen Aufdickungen herstellbar sind.

Diese Aufgabe wird bei einer Werkzeugform nach dem Oberbegriff des Anspruchs 1 durch die kennzeichnenden Merkmale des Anspruchs 1 gelöst. Weiterbildungen und vorteilhafte Ausgestaltungen der Erfindungen ergeben sich aus den Unteransprüchen.

Erfindungsgemäß ist vorgesehen, dass in wenigstens einem bestimmten vorgegebenen Bereich der äußeren Wandungsbereiche der Werkzeugform Heizrohre derart ausgebildet und angeordnet sowie mit der Werkzeugform verbunden sind, dass in diesem Bereich eine gegenüber anderen Bereichen höhere oder geringere Zufuhr von Heizenergie erreicht wird.

Durch die höhere Zufuhr von Heizenergie im vorgegebenen Bereich wird erreicht, dass der mit der erfindungsgemäßen Werkzeugform hergestellte Formkörper in dem Bereich der inneren Wandungsbereiche, der diesem vorgegebenen Bereich der äußeren Wandungsbereiche gegenüber liegt, eine Aufdickung erhält.

Durch die geringere Zufuhr von Heizenergie im vorgegebenen Bereich wird erreicht, dass der mit der erfindungsgemäßen Werkzeugform hergestellte Formkörper in dem Bereich der inneren Wandungsbereiche, der gerade nicht diesem vorgegebenen Bereich der äußeren Wandungsbereiche gegenüber liegt, eine Aufdickung erhält. Der mit der erfindungsgemäßen Werkzeugform hergestellte Formkörper erhält also nur in dem Bereich der inneren Wandungsbereiche, der den anderen Bereichen gegenüber liegt, eine Aufdeckung.

Die Aufdickung führt vorteilhaft zu einer Verstärkung des Formkörpers in diesem Bereich. Um eine partielle Aufdickung innerhalb des Formkörpers zu erhalten, ist es mithin nicht mehr erforderlich, den gesamten Formkörper mit einer größeren Wandstärke herzustellen. Dies führt vorteilhaft zu einer Gewichtsreduzierung des herzustellenden Formkörpers. Die Materialeinsparung senkt zusätzlich die Herstellungskosten.

Eine derartige partielle Aufdickung ist beispielsweise bei einem Formkörper, insbesondere bei einer Deckfolie erwünscht, die für eine Airbag-Verkleidung verwendet wird. In diese Aufdickung können nämlich entlang einer Sollbruchlinie verlaufende Schwächungsstrukturen besonders materialschonend eingearbeitet werden.

Eine Weiterbildung sieht vor, dass der Abstand benachbarter, im vorgegebenen Bereich angeordneter Heizrohre kleiner ist als der Abstand benachbarter, in anderen Bereichen angeordnetter Heizrohre.

Dadurch wird in diesem vorgegebenen Bereich eine gegenüber anderen Bereichen höhere Zufuhr von Heizenergie erreicht, so dass eine partielle Aufdickung des Formkörpers in dem Bereich der inneren Wandungsbereiche, der diesem vorgegebenen Bereich der äußeren Wandungsbereiche gegenüber liegt, erhalten wird.

Vorzugsweise beträgt der Abstand benachbarter, im vorgegebenen Bereich angeordneter Heizrohre 10 mm bis 20 mm. Dieser Abstand hat sich bei den üblichen nach dem Stand der Technik verwendeten Werkzeugformen als besonders geeignet erwiesen, die partielle Aufdickung des Formkörpers zu erhalten.

Eine vorteilhafte Ausgestaltung der Erfindung sieht vor, dass der Abstand benachbarter, im vorgegebenen Bereich angeordneter Heizrohre größer ist als der Abstand benachbarter, in anderen Bereichen angeordneter Heizrohre.

Dadurch wird in diesem vorgegebenen Bereich eine gegenüber anderen Bereichen geringere Zufuhr von Heizenergie erreicht, so dass eine partielle Aufdickung des Formkörpers in dem Bereich der inneren Wandungsbereiche, der diesem vorgegebenen Bereich der äußeren Wandungsbereiche gerade nicht gegenüber liegt, erhalten wird. Eine partielle Aufdickung des Formkörpers entsteht also dadurch, dass der Formkörper in dem Bereich der inneren Wandungsbereiche, der dem vorgegebenen Bereich der äußeren Wandungsbereiche gegenüber liegt, mit einer geringeren Dicke als üblich hergestellt wird.

Vorzugsweise beträgt der Abstand benachbarter, im vorgegebenen Bereich angeordneter heizrohre hierzu 30 mm bis 40 mm. Dieser Abstand hat sich bei den üblichen nach dem Stand der Technik verwendeten Werkzeugformen als besonders geeignet erwiesen, eine geringere Dicke des Formkörpers in dem Bereich der inneren Wandungsbereiche, der dem vorgegebenen Bereich der äußeren Wandungsbereiche gegenüber liegt, zu erhalten. Weiterhin ist vorgesehen, dass der Durchmesser wenigstens einiger der im vorgegebenen Bereich angeordneten Heizrohre gegenüber dem Durchmesser der in anderen Bereichen angeordneten Heizrohre verschieden ist.

Dadurch wird im vorgegebenen Bereich eine gegenüber anderen Bereichen höhere oder geringere Zufuhr von Heizenergie erreicht. Hierbei wird sich die Erkenntnis zunutze gemacht, dass unterschiedliche Rohrdurchmesser unterschiedlich starke turbulente Strömungen des Wärmeträgerfluids im Heizrohr verursachen, wobei eine starke turbulente Strömung eine bessere Wärmeübertragung bewirkt.

In einer vorteilhaften Ausgestaltung der Erfindung ist vorgesehen, dass die im vorgegebenen Bereich angeordneten Heizrohre derart auf der Werkzeugform aufgelötet sind, dass die Lötnaht und deren Wurzelausbildung über die gesamte mit der Werkzeugform verbundenen Länge eines Heizrohrs gleichmäßig ausgeführt ist.

Durch die gleichmäßige Ausführung wird eine gleichmäßige Wärmeübertragung in den Bereich der inneren Wandungsbereiche, der dem vorgegebenen Bereich der äußeren Wandungsbereiche gegenüber liegt, erreicht, so dass die partielle Aufdickung im Formkörper eine gleichmäßige Wandstärke erreicht.

Eine Weiterbildung der Erfindung sieht vor, dass die im vorgegebenen Bereich angeordneten Heizrohre derart auf der Werkzeugform aufgelötet sind, dass zwischen Heizrohr und Werkzeugform keine Luft eingeschlossen ist. Eingeschlossene Luft würde zu einer schlechteren Zufuhr von Heizenergie und dadurch zu Unregelmäßigkeiten innerhalb der Aufdickung führen.

Weiterhin ist vorgesehen, dass wenigstens eines der im vorgegebenen Bereich angeordneten Heizrohre U-förmig ausgebildet ist, wobei zwei nebeneinander angeordnete U-förmige Heizrohre derart ineinander verschachtelt sind, dass der Schenkel des einen U-förmigen Heizrohrs in den Zwischenraum des anderen U-förmigen Heizrohrs ragt.

Eine derartige Ausbildung und Anordnung der Heizrohre ist geeignet, den Bereich der inneren Wandungsbereiche, der dem vorgegebenen Bereich der äußeren Wandungsbereiche gegenüber liegt, gleichmäßig mit Heizenergie zu versorgen, um eine scharfe Begrenzung der Aufdickung innerhalb des Formkörpers zu erhalten. Hierzu beträgt der Abstand zwischen den Schenkeln eines U-förmigen Heizrohrs 20 mm bis 40 mm für eine höhere Zufuhr von Heizenergie oder 60 bis 80 mm für eine geringere Zufuhr von Heizenergie.

Wenigstens einige der im vorgegebenen Bereich angeordneten Heizrohre sind vorzugsweise parallel zueinander angeordnet, um auch so eine gleichmäßig Zufuhr von Heizenergie in den Bereich der inneren Wandungsbereiche, der dem vorgegebenen Bereich der äußeren Wandungsbereiche gegenüber liegt, zu erreichen.

An geometrisch ungünstigen Stellen des vorgegebenen Bereichs können die Heizrohre selbstverständlich eine Form und/oder Anordnung aufweisen, die von der bevorzugten U-Form oder der parallelen Anordnung abweichen.

Außerdem ist vorgesehen, dass der mit der Werkzeugform verbundene Abschnitt eines im vorgegebenen Bereich angeordneten Heizrohrs eine Länge von bis zu 800 mm aufweist.

Dadurch wird erreicht, dass das Heizenergiegefälle vom Eintritt des Wärmeträgerfluids in die Rohreintrittsöffnung bis zum Austritt des Wärmeträgerfluids aus der Rohraustrittsöffnung nicht zu groß wird, so dass eine gleichmäßige Zufuhr von Heizenergie auf den vorgegebenen Bereich bzw. auf den diesem Bereich gegenüberliegenden Bereich gewährleistet ist.

Sofern hier und im Folgenden von einem Wärmeträgerfluid die Rede ist, so handelt es sich vorzugsweise um ein WärmeträgerÖl. Dem Fachmann sind aber auch andere Fluide bekannt, die sich erfindungsgemäß als Wärmeträger eignen.

Gemäß einer Weiterbildung der Erfindung sind die im vorgegebenen Bereich angeordneten Heizrohre im Wesentlichen gleich lang, wodurch eine gleichmäßige Zufuhr von Heizenergie erreicht und Unregelmäßigkeiten in der Aufdickung des Formkörpers vermieden wird.

Vorteilhaft gehen die Endabschnitte der Heizrohre in einem Winkel von 45° oder weniger von der Oberfläche der Werkzeugform ab.

Dadurch wird der beim Durchströmen des Heizrohrs mit Wärmeträgerfluid auftretende Widerstand im Heizrohr gering gehalten. Ein 90°-Abgang der Endabschnitte des Heizrohrs ist zu vermeiden.

Eine vorteilhafte Ausgestaltung der Erfindung sieht vor, dass die Wärmerträgerfluid-Eintrittsöffnungen benachbarter, im vorgegebenen Bereich angeordneter Heizrohre derart entgegengesetzt angeordnet sind, dass der Wärmeträgerfluidstrom eines Heizrohrs dem des benachbarten Heizrohrs entgegenläuft.

Dadurch wird trotz eines möglichen Heizenergie-Gefälles innerhalb eines Heizrohrs die gleichmäßige Erwärmung des vorgegebenen Bereichs bzw. des diesem gegenüberliegenden Bereichs der inneren Wandungsbereiche erreicht.

Vorzugsweise ist die Werkzeugform als hohle Negativform ("Slush-Form") für einen Riesel-Sinter-Prozess ausgebildet, in die ein Polymer-Pulver eingebracht wird und unter Heizenergiezufuhr und ein oder mehrachsiger Bewegung, insbesondere Rotation der Werkzeugform an deren inneren Wandungsbereichen zu einem Formkörper sintert.

Mit einer derartigen Werkzeugform können insbesondere Formhäute, bevorzugt für Armaturentafeln, Tür- oder Seitenverkleidungen von Fahrzeugen, hergestellt werden. Eine partielle Aufdickung der Formhäute ist insbesondere im Bereich einer Airbag-Abdeckung gewünscht.

Alternativ dazu ist die Werkzeugform vorzugsweise als hohle Negativform für ein Polyurethan-Sprühverfahren ausgebildet, bei dem ein flüssiges Reaktionsgemisch in die Werkzeugform eingebracht und unter Heizenergiezufuhr und ggf. unter ein-oder mehrachsiger Bewegung der Werkzeugform und/oder der Sprühdüse an den inneren Wandungsbereichen der Werkzeugform zu einem Formkörper polymerisiert.

Weiterhin ist vorgesehen, dass die Werkzeugform als hohle Negativform für ein Gießverfahren ausgebildet ist, bei dem ein flüssiges Reaktionsgemisch in die Werkzeugform eingebracht und unter Heizenergiezufuhr und ggf. unter ein- oder mehrachsiger Bewegung der Werkzeugform an den inneren Wandungsbereichen der Werkzeugform zu einem Formkörper polymerisiert.

Vorteilhaft ist die hohle Negativform als Werkzeugform für oberflächenstrukturierte Bauteile, insbesondere geformte Folien (Kunstlederfolien) ausgebildet.

In einer Weiterbildung der Erfindung ist vorgesehen, dass die im vorgegebenen Bereich angeordneten Heizrohre ohne Kurzschluss direkt an einem Hauptverteiler angeklemmt sind.

Eine vorteilhafte Ausgestaltung der Erfindung sieht vor, dass die Werkzeugform derart ausgebildet ist, dass durch die Heizrohre nacheinander zunächst Wärmeträgerfluid und dann Kälteträgerfluid leitbar ist.

Durch das Kälteträgerfluid wird erreicht, dass die zugeführte Heizenergie nach Fertigstellung des Formkörpers schnell wieder abgeführt werden kann. Dadurch wird einerseits ermöglicht, dass der Formkörper vorzeitig aus der Werkzeugform entnommen und die Werkzeugform erneut verwendet werden kann, andererseits wird verhindert, dass die durch die höhere oder geringere Zufuhr von Heizenergie erhaltene Aufdickung des Formkörpers unter dem noch vorhandenen Einfluss der zuvor zugeführten Heizenergie zerläuft. Das Kälteträgerfluid gewährleistet also eine möglichst scharfe Begrenzung der Aufdickung.

Nachfolgend wird die Erfindung anhand eines Ausführungsbeispiels erläutert, das in der Zeichnung dargestellt ist. In dieser zeigen:
- Fig. 1: eine Draufsicht auf einen erfindungsgemäßen vorgegebenen Bereich einer Werkzeugform in schematischer Darstellung
- Fig. 2: einen Querschnitt durch den erfindungsgemäßen vorgegebenen Bereich einer Werkzeug form in schematischer Darstellung und
- Fig. 3: eine Seitenansicht des erfindungsgemäßen vorgegebenen Bereichs einer Werkzeugform in schematischer Darstellung.

In den Figuren der Zeichnung sind gleiche Teile stets mit den gleichen Bezugszeichen versehen.

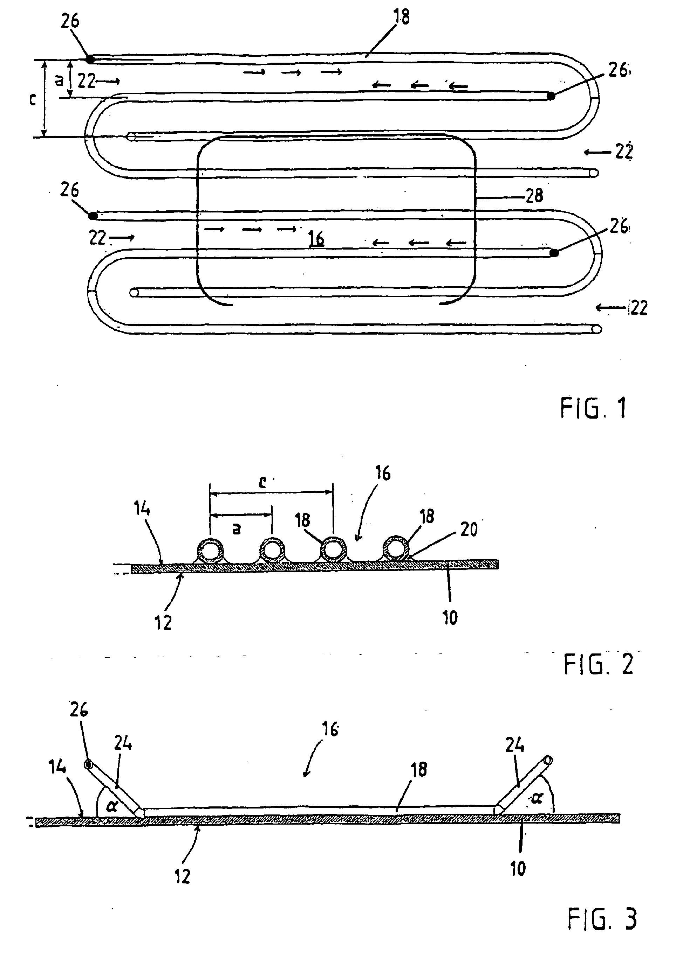

Fig. 1 zeigt schematisch eine Draufsicht auf einen erfindungsgemäßen vorgegebenen Bereich 16 einer hier nicht dargestellten Werkzeugform, bei der die formgebende Herstellung von Formkörpern aus Polymerwerkstoffen, insbesondere aus Polymergranulaten bzw. Polymer-Pulvern, unter Wärmezufuhr und Formgebung an inneren Wandungsbereichen der Werkzeugform erfolgt.

Erfindungsgemäß sind in dem vorgegebenen Bereich 16 vier Heizrohre 18 derart ausgebildet und angeordnet sowie mit der Werkzeugform verbunden, dass in diesem Bereich 16 eine gegenüber anderen Bereichen erhöhte Zufuhr von Heizenergie erreicht wird, wodurch eine Aufdickung in diesem Bereich erhalten wird.

Eine derartige partielle Aufdickung ist bei einem Formkörper, insbesondere bei einer Deckfolie für eine Airbag-Verkleidung erwünscht, da in eine solche Aufdickung Schwächungsstrukturen, die entlang einer Sollbruchlinie verlaufen, de besonders materialschonend eingearbeitet werden können.

Der Abstand a benachbarter, im vorgegebenen Bereich 16 angeordneter Heizrohre 18 beträgt bei den üblicherweise verwendeten Werkzeugformen vorzugsweise etwa 20 mm.

Die Heizrohre 18 sind hierbei U-förmig ausgebildet, wobei zwei nebeneinander angeordnete U-förmige Heizrohre 18 derart ineinander verschachtelt sind, dass der Schenkel des einen U-förmigen Heizrohrs (18) in den Zwischenraum (22) des anderen U-förmigen Heizrohrs (18) ragt.

Der Abstand c zwischen den Schenkeln eines U-förmigen Heizrohrs 18 beträgt bei den üblichen Werkzeugformen vorzugsweise 40 mm.

Die im vorgegebenen Bereich 16 angeordneten Heizrohre 18 sind parallel zueinander angeordnet und im Wesentlichen gleich lang ausgebildet, um so eine gleichmäßige Zufuhr und Verteilung von Heizenergie im vorgegebenen Bereich der Werkzeugform zu erreichen.

Die Wärmerträgerfluid-Eintrittsöffnungen 26 benachbarter, im vorgegebenen Bereich angeordneter Heizrohre 18 sind vorteilhaft derart entgegengesetzt angeordnet, dass der Wärmeträgerfluidstrom eines Heizrohrs 18 dem des benachbarten Heizrohrs 18 entgegenläuft. Dies ist in der Zeichnung durch jeweils drei hintereinander angeordnete Pfeile dargestellt.

Fig. 2 zeigt schematisch einen Querschnitt durch den erfindungsgemäßen vorgegebenen Bereich 16 einer hier nur teilweise dargestellten Werkzeugform 10, bei der die formgebende Herstellung von Formkörpern aus Polymerwerkstoffen unter Wärmezufuhr und Formgebung an inneren Wandungsbereichen 12 der Werkzeugform 10 erfolgt.

Erfindungsgemäß sind in einem bestimmten vorgegebenen Bereich 16 der äußeren Wandungsbereiche 14 der Werkzeugform 10 Heizrohre 18 derart ausgebildet und angeordnet sowie mit der Werkzeugform 10 verbunden, dass in diesem Bereich 16 eine gegenüber anderen Bereichen erhöhte Zufuhr von Heizenergie erreicht wird.

Der Abstand a benachbarter, im vorgegebenen Bereich 16 angeordneter Heizrohre 18 beträgt 20 mm.

Die im vorgegebenen Bereich 16 angeordneten Heizrohre 18 sind derart auf der Werkzeugform 10 aufgelötet, dass die Lötnaht 20 und deren Wurzelausbildung über die gesamte mit der Werkzeugform 10 verbundenen Länge eines Heizrohrs 18 gleichmäßig ausgeführt sind. Hierbei sind die Heizrohre 18 derart auf der Werkzeugform 10 aufgelötet, dass zwischen Heizrohr 18 und Werkzeugform 10 keine Luft eingeschlossen ist.

Die im vorgegebenen Bereich 16 angeordneten Heizrohre 18 sind U-förmig ausgebildet, wobei der Abstand c zwischen den Schenkeln eines U-förmigen Heizrohrs 18 etwa 40 mm beträgt.

Die im vorgegebenen Bereich 16 angeordneten Heizrohre 18 sind parallel zueinander angeordnet und im Wesentlichen gleich lang ausgebildet.

Fig. 3 zeigt schematisch eine Seitenansicht des erfindungsgemäßen vorgegebenen Bereichs 16 einer nur teilweise dargestellten Werkzeugform 10, bei der die formgebende Herstellung von Formkörpern aus Polymerwerkstoffen unter Wärmezufuhr und Formgebung an inneren Wandungsbereichen 12 der Werkzeugform 10 erfolgt.

Erfindungsgemäß sind in dem vorgegebenen Bereich 16 der äußeren Wandungsbereiche 14 der Werkzeugform 10 Heizrohre 18 derart ausgebildet und angeordnet sowie mit der Werkzeugform 10 verbunden, dass in diesem Bereich eine gegenüber anderen Bereichen erhöhte Zufuhr von Heizenergie 16 erreicht wird.

Die Endabschnitte 24 der Heizrohre 18 gehen in einem Winkel α von 45° von der Oberfläche der Werkzeugform 10 ab.

### Bezugszeichenliste

### (ist Bestandteil der Beschreibung)

- 10: Werkzeugform
- 12: innere Wandungsbereiche
- 14: äußere Wandungsbereiche
- 16: vorgegebener Bereich
- 18: Heizrohre
- 20: Lötnaht
- 22: Zwischenraum
- 24: Endabschnitt
- 26: Eintrittsöffnung
- 28: Schwächungsstrukturen

- a: Abstand
- c: Abstand

- α: Winkel

## Patentansprüche

1. Werkzeugform (10) für die formgebende Herstellung von Formkörpern aus Polymerwerkstoffen, insbesondere Polymergranulaten bzw. Polymer-Pulvern, bei der die formgebende Herstellung unter Wärmezufuhr und Formgebung an inneren Wandungsbereichen (12) der Werkzeugform (10) erfolgt, wobei in wenigstens einem bestimmten vorgesehenen Bereich (16) der äußeren Wandungsbereiche (14) der Werkzeugform (10) Heizrohre (18) derart ausgebildet und angeordnet sowie mit der Werkzeugform (10) verbunden sind, dass in diesem Bereich (16) eine gegenüber anderen Bereichen höhere oder geringere Zufuhr von Heizenergie erreicht wird, wobei
der Abstand (a) und/oder der Durchmesser benachbarter, im vorgegebenen Bereich (16) angeordneter Heizrohre (18) kleiner oder größer ist als der Abstand und/ oder der Durchmesser benachbarter, in anderen Bereichen angeordneter Heizrohre und wenigstens eines der im vorgegebenen Bereich (16) angeordneten Heizrohre (18) U-förmig ausgebildet ist **dadurch gekennzeichnet, dass** zwei nebeneinander angeordnete U-förmige Heizrohre (18) derart ineinander verschachtelt sind, dass der Schenkel des einen U-förmigen Heizrohrs (18) in den Zwischenraum (22) des anderen U-förmigen Heizrohrs (18) ragt.

2. Werkzeugform (10) nach Anspruch 1, **dadurch gekennzeichnet, dass** die im vorgegebenen Bereich (16) angeordneten Heizrohre (18) derart auf der Werkzeugform (10) aufgelötet sind, dass die Lötnaht (20) und deren Wurzelausbildung über die gesamte mit der Werkzeugform verbundenen Länge jedes Heizrohrs (18) gleichmäßig ausgeführt ist.

3. Werkzeugform (10) nach Anspruch 2, **dadurch gekennzeichnet, dass** die im vorgegebenen Bereich (16) angeordneten Heizrohre (18) derart auf der Werkzeugfonm (10) aufgelötet sind, dass zwischen Heizrohr (18) und Werkzeugform (10) keine Luft eingeschlossen ist.

4. Werkzeugform (10) nach einem der Ansprüche 1 bis 3, **dadurch gekennzeichnet, dass** die Endabschnitte (24) der im vorgegebenen Bereich angeordneten Heizrohre (18) in einem Winkel (α) von 45° oder weniger von der Oberfläche der Werkzeugform (10) abgehen.

5. Werkzeugform (10) nach einem der Ansprüche 1 bis 4, **dadurch gekennzeichnet, dass** die Wärmeträgerfluid-Eintrittsöffnungen (26) benachbarter, im vorgegebenen Bereich angeordneter Heizrohre (18) derart entgegengesetzt angeordnet sind, dass der Wärmeträgerfluidstrom eines Heizrohrs dem des benachbarten Heizrohrs entgegenläuft.

6. Werkzeugform (10) nach einem der Ansprüche 1 bis 5, **dadurch gekennzeichnet, dass** die Werkzeugform (10) als hohle Negativform für einen Riesel-Sinter-Prozess ausgebildet ist, in die ein Polymer-Pulver eingebracht und unter Wärmezufuhr sowie ein- oder mehrachsiger Bewegung, insbesondere Rotation der Werkzeugform an deren inneren Wandungsbereichen (12) zu einem Formkörper sintert.

7. Werkzeugform (10) nach einem der Ansprüche 1 bis 6, **dadurch gekennzeichnet, dass** die Werkzeugform (10) als hohle Negativform für ein Sprühverfahren ausgebildet ist, bei dem ein flüssiges Reaktionsgemisch in die Werkzeugform (10) eingebracht und unter Wärmezufuhr und ggf. unter ein- oder mehrachsiger Bewegung der Werkzeugform (10) und/oder der Sprühdüse an den inneren Wandungsbereichen (12) der Werkzeugform (10) zu einem Formkörper polymerisiert.

8. Werkzeugform (10) nach einem der Ansprüche 1 bis 7, **dadurch gekennzeichnet, dass** die Werkzeugform (10) als hohle Negativform für ein Gießverfahren ausgebildet ist, bei dem ein flüssiges Reaktionsgemisch in die Werkzeugform (10) eingebracht und unter Wärmezufuhr und ggf. unter ein- oder mehrachsiger Bewegung der Werkzeugform (10) an den inneren Wandungsbereichen (12) der Werkzeugform (10) zu einem Formkörper polymerisiert.

9. Werkzeugform (10) nach Anspruch 8, **dadurch gekennzeichnet, dass** die hohle Negativform als Werkzeugform (10) für oberflächenstrukturierte Bauteile, insbesondere geformte Folien ausgebildet ist.

10. Werkzeugform (10) nach einem der Ansprüche 1 bis 9, **dadurch gekennzeichnet, dass** die im vorgegebenen Bereich (16) angeordneten Heizrohre (18) ohne Kurzschluss direkt an einem Hauptverteiler angeklemmt sind.

11. Werkzeugform (10) nach einem der Ansprüche 1 bis 10, **dadurch gekennzeichnet, dass** die Werkzeugform derart ausgebildet ist, dass nach dem Durchleiten eines Wärmeträgerfluids durch die Heizrohre ein Kälteträgerfluid durch die Heizrohre leitbar ist.

12. Verfahren zur formgebenden Herstellung von Formkörpern aus Polymerwerkstoffen, insbesondere Polymergranulaten bzw. Polymer-Pulvern, mit einer Werkzeug form nach einem der Ansprüche 1 bis 11 bei dem die formgebende Herstellung unter Wärmezufuhr und Formgebung an inneren Wandungsbereichen (12) der Werkzeugform (10) erfolgt, wobei in wenigstens einem bestimmten vorgesehenen Bereich (16) der äußeren Wandungsbereiche (14) der Werkzeugform (10) Heizrohre (18) derart ausgebildet und angeordnet sowie mit der Werkzeugform (10) verbunden sind, dass in diesem Bereich (16) eine gegenüber anderen Bereichen höhere oder geringere Zufuhr von Heizenergie erreicht wird, wobei
durch ineinander geschachtelt angeordnete, u-förmige Heizrohre (18) in dem vorgegebenen Bereich (16) und/oder dem anderen Bereich, in dem einen gegenüber dem jeweils anderen Bereich höhere Zufuhr von Heizenergie erfolgt, eine partielle Aufdickung innerhalb des zu bildenden Formkörpers gebildet wird.

13. Verfahren nach Anspruch 12,
**dadurch gekennzeichnet, dass** durch die Heizrohre (18) nacheinander zunächst Wärmeträgerfluid und dann Kälteträgerfluid geleitet wird.

## Claims

1. Tool mould (10) for the shaping manufacture of moulded articles from polymer materials including but not limited to polymer granulates or, respectively, polymer powders, in which shaping manufacture is done by heat input and forming at the inner wall areas (12) of the tool mould (10), while, in at least one determined and provided area (16) of the external wall areas (14) of the tool mould (10), heating pipes (18) are so designed and arranged and connected to the tool mould (10) as to achieve a higher or lower input of heat energy in this area (16) as compared to other areas, wherein
the distance (a) and/or the diameter of neighbouring heating pipes (18) arranged in the specified area (16) is smaller or greater than the distance and/or diameter of neighbouring heating pipes arranged in other areas, and at least one of the heating pipes (18) arranged in the specified area (16) has a U-shaped design, and two U-shaped heating pipes (18) arranged side by side are so nested one into another that the leg of the one U-shaped heating pipe (18) projects into the intermediate space (22) of the other U-shaped heating pipe (18).

2. Tool mould (10) as claimed in claim 1, **characterized in that** the heating pipes (18) arranged in the specified area (16) are so brazed or soldered on the tool mould (10) that the brazed or soldered joint (20) and their root design is implemented uniformly over the entire length of every heating pipe (18) connected to the tool form.

3. Tool mould (10) as claimed in claim 2, **characterized in that** the heating pipes (18) arranged in the specified area (16) are so brazed or soldered on the tool mould (10) that no air is confined between heating pipe (18) and tool mould (10).

4. Tool mould (10) as claimed in any claim 1 through 3, **characterized in that** the final sections (24) of the heating pipes (18) arranged in the specified area branch off at an angle (α) of 45° or less from the surface of the tool mould (10).

5. Tool mould (10) as claimed in any claim 1 through 4, **characterized in that** the heat transfer fluid inlet ports (26) of neighbouring heating pipes (18) arranged in the specified area are arranged opposite in such a way that the heat transfer fluid flow of one heating pipe runs against the flow of the neighbouring heating pipe.

6. Tool mould (10) as claimed in any claim 1 through 5, **characterized in that** the tool mould (10) is designed as a hollow female mould for a trickle-sinter process into which form polymer powder is introduced and sinters to form a moulded article at the tool mould's inner wall areas (12) while being subjected to heat input, movement around one or more axes including but not limited to the rotation of the tool mould.

7. Tool mould (10) as claimed in any claim 1 through 6, **characterized in that** the tool mould (10) is designed as a hollow female mould for a spray process during which a liquid reaction mixture is introduced into the tool mould (10) and polymerises to form a moulded article at the inner wall areas (12) of the tool mould (10) while being subjected to heat input and, if any, tool mould (10) and or spray nozzle movement around one or more axes.

8. Tool mould (10) as claimed in any claim 1 through 7, **characterized in that** the tool mould (10) is designed as a hollow female mould for a casting procedure during which a liquid reaction mixture is introduced into the tool mould (10) and polymerises to form a moulded article at the inner wall areas (12) of the tool mould (10) while being subjected to heat input, and, if any, tool mould (10) rotation around one or more axes.

9. Tool mould (10) as claimed in claim 8, **characterized in that** the hollow female mould is designed as a tool mould (10) for surface-structured components including but not limited to formed film.

10. Tool mould (10) as claimed in any claim 1 through 9, **characterized in that** the heating pipes (18) arranged in the specified area (16) are connected without short-circuit directly to a main switchboard.

11. Tool mould (10) as claimed in any claim 1 through 10, **characterized in that** the tool mould is designed in such a way that, after conducting a heat transfer fluid through the heating pipes, a refrigerating fluid is conductible through the heating pipes.

12. Procedure for the shaping manufacture of moulded articles from polymer materials including but not limited to polymer granulates or polymer powders, in which shaping manufacture is done by heat input and forming at the inner wall areas (12) using a tool mould (10) as claimed in any claim 1 through 11, while, in at least one determined and provided area (16) of the external wall areas (14) of the tool mould (10), heating pipes (18) are so designed and arranged and connected to the tool mould (10) as to achieve a higher or lower input of heat energy in this area (16) as compared to other areas, wherein
a partial thickening is created within the moulded article to be created by U-shaped heating pipes (18) in an arrangement nested into one another in the specified area (16) and/or the other area in which a higher input of heat energy is provided as compared to the corresponding other area.

13. Procedure as claimed in claim 12,
**characterized in that** heat transfer fluid is conducted through the heating pipes (18) initially and refrigerating fluid is conducted after that.

## Revendications

1. Moule (10) pour la fabrication par modelage de corps moulés en matériaux polymères, en particulier de granulés polymères ou de poudres polymères, où la fabrication par modelage est réalisée par apport de chaleur et modelage sur des zones de paroi intérieures (12) du moule (10), où des tubes chauffants (18) sont réalisés, disposés et raccordés au moule (10) dans au moins une zone (16) spécifique définie des zones de paroi extérieures (14) du moule (10), de manière à obtenir dans cette zone (16) un apport d'énergie de chauffage supérieur ou inférieur par rapport à d'autres zones, où l'espacement (a) et/ou le diamètre de tubes chauffants (18) contigus disposés dans la zone (16) définie sont inférieurs ou supérieurs à l'espacement et/ou au diamètre de tubes chauffants contigus disposés dans d'autres zones, et où au moins un des tubes chauffants (18) disposés dans la zone (16) définie est réalisé avec une forme en U,
**caractérisé en ce que**
deux tubes chauffants (18) en forme de U disposés côte à côte sont imbriqués l'un dans l'autre de telle manière que la branche du premier tube chauffant (18) en forme de U pénètre dans l'ouverture (22) de l'autre tube chauffant (18) en forme de U.

2. Moule (10) selon la revendication 1, **caractérisé en ce que** les tubes chauffants (18) disposés dans la zone (16) définie sont soudés sur le moule (10) de telle manière que le cordon de soudure (20) et sa racine sont réalisés de manière homogène sur toute la longueur de raccordement au moule de chaque tube chauffant (18).

3. Moule (10) selon la revendication 2, **caractérisé en ce que** les tubes chauffants (18) disposés dans la zone (16) définie sont soudés sur le moule (10) de telle manière que de l'air n'est pas inclus entre le tube chauffant (18) et le moule (10).

4. Moule (10) selon l'une des revendications 1 à 3, **caractérisé en ce que** les segments d'extrémité (24) des tubes chauffants (18) disposés dans la zone définie se dressent au-dessus de la surface du moule (10) suivant un angle (α) de 45° ou moins.

5. Moule (10) selon l'une des revendications 1 à 4, **caractérisé en ce que** les ouvertures d'admission de fluide caloporteur (26) de tubes chauffants (18) contigus disposés dans la zone définie sont disposées à distance l'une de l'autre, de telle manière que le flux de fluide caloporteur d'un tube chauffant s'écoule en sens contraire de celui du tube chauffant contigu.

6. Moule (10) selon l'une des revendications 1 à 5, **caractérisé en ce que** le moule (10) est réalisé comme moule négatif creux pour un processus de frittage par écoulement, où est versée une poudre polymère qui est frittée pour former un corps moulé par apport de chaleur et par déplacement sur un ou plusieurs axes, en particulier par rotation du moule sur ses zones de paroi intérieures (12).

7. Moule (10) selon l'une des revendications 1 à 6, **caractérisé en ce que** le moule (10) est réalisé comme moule négatif creux pour un processus de pulvérisation, où un mélange réactif liquide est versé dans le moule (10), lequel polymérise pour former un corps moulé par apport de chaleur et le cas échéant par déplacement du moule (10) et/ou de la buse de pulvérisation sur un ou plusieurs axes sur les zones de paroi (12) intérieures du moule (10).

8. Moule (10) selon l'une des revendications 1 à 7, **caractérisé en ce que** le moule (10) est réalisé comme moule négatif creux pour un processus de coulée, où un mélange réactif liquide est versé dans le moule (10), lequel polymérise pour former un corps moulé par apport de chaleur et le cas échéant par déplacement du moule (10) sur un ou plusieurs axes sur les zones de paroi (12) intérieures du moule (10).

9. Moule (10) selon la revendication 8, **caractérisé en ce que** le moule négatif creux est prévu comme moule (10) pour des composants à surface structurée, en particulier des feuilles moulées.

10. Moule (10) selon l'une des revendications 1 à 9, **caractérisé en ce que** les tubes chauffants (18) disposés dans la zone (16) définie sont directement connectés à un distributeur principal, sans court-circuit.

11. Moule (10) selon l'une des revendications 1 à 10, **caractérisé en ce que** le moule est réalisé de telle manière qu'après la conduction d'un fluide caloporteur dans les tubes chauffants, un fluide frigoporteur peut être conduit dans lesdits tubes chauffants.

12. Procédé de fabrication par modelage de corps moulés en matériaux polymères, en particulier de granulés polymères ou de poudres polymères avec un moule selon l'une des revendications 1 à 11, où la fabrication par modelage est réalisée par apport de chaleur et modelage sur des zones de paroi intérieures (12) du moule (10), où des tubes chauffants (18) sont réalisés, disposés et raccordés au moule (10) dans au moins une zone (16) spécifique définie des zones de paroi extérieures (14) du moule (10), de manière à obtenir dans cette zone (16) un apport d'énergie de chauffage supérieur ou inférieur par rapport à d'autres zones, où une surépaisseur partielle est formée à l'intérieur du corps moulé à réaliser au moyen de tubes chauffants (18) en forme de U disposés en imbrication l'un dans l'autre dans la zone (16) définie et/ou dans la zone où est effectué un apport d'énergie de chauffage supérieur par rapport à l'autre zone correspondante.

13. Procédé selon la revendication 12, **caractérisé en ce qu'**un fluide caloporteur puis un fluide frigoporteur sont successivement conduits dans les tubes chauffants (18).
